# EUROPEAN PATENT APPLICATION

(11) **EP 2 801 259 A1**
(43) Date of publication of application: **12.11.2014**
(21) Application number: 13166679.4
(22) Date of filing: 06.05.2013
(51) Int. Cl.: A23B 7/144, A23B 7/152

(54) **Container for transport or storage of ethylene sensitive perishable products, device for use therein and method for inhibiting degradation of ethylene sensitive perishable products**

(71) Applicant: Atmosphere Controlling Technology B.V., 2343 LB Oegstgeest (NL)
(72) Inventor: Van Velzen Dick, 2343 BR Oegstgeest (NL); Van der Luit, Johan Louis, 2341 PD Oegstgeest (NL); Monster, Victor Steven, 2343 BR Oegstgeest (NL); Van den Berg, Eugene Robert, 2341 KD Oegstgeest (NL)
(74) Representative: Bras, Pieter

(57) **Abstract**

The invention relates to a container for transport or storage of ethylene sensitive perishable products and its use and a device for use in this container and use of this device. The invention also relates to a method for inhibiting degradation of ethylene sensitive perishable products wherein a chlorine releasing agent is used to inhibit degradation of said perishable products.

## Description

The invention relates to a container for transport or storage of ethylene sensitive perishable products and its use and a device for use in this container and use of this device. The invention also relates to a method for inhibiting degradation of ethylene sensitive perishable products wherein a chlorine releasing agent is used to inhibit degradation of said perishable products.

### BACKGROUND OF THE INVENTION

Harvest products such as fruit, vegetables and flowers are usually harvested in an early to late pre-ripening stage, subsequently cooled and transported by various means such as road and air transport but also by ship in containers. Upon arrival at their destination, the products are transported to cooled storage facilities, but may also be moved between cooled storage facilities a number of times. Here they remain until marketing and retail shipping. Transporting fruit often involves long distance transport with a considerable time lapse. This creates a pressure to harvest or pick fruit as early as possible. However, in many cases products cannot be harvested too early because of the climacteric nature of the product. Climacteric fruit, for instance, passes a point during its development, after which, left to itself either on the plant or after picking, such fruit will mature and ripen normally. This is often referred to as the point of climacterium.

Ripening of fruit or of any other ethylene sensitive perishable product is induced by ethylene which is a natural "ripening hormone" that is naturally released by the fruit itself although fruits may also be artificially exposed to ethylene. If harvested before the point of climacterium, no amount of time or exposure to ethylene hormone will result in proper ripening with all its characteristic features, such as change of color, texture, development of sweetness and species specific taste and smell by the release from starch stores of free sugars and the synthesis and release of aromatic oils.

Once past the point of climacterium, the path towards ripening and inevitable over-ripening has irreversibly been set in. This leaves a limited time span for harvesting, processing, transporting and sale of such fruit. Untimely over-ripening results in considerable commercial losses because a substantial amount of fruit has not yet been sold by the end of "shelf life". Similarly, commercial losses by complaints and re-imbursement of dissatisfied customers occur when fruit was picked to early and satisfactory ripening had not been achieved. However, during this period, the self-generated and secreted ethylene has a positive bio-feedback in that it accelerates ripening. Thus, exposure to excess ethylene may serve to further accelerate ripening. On the other hand, removal or inactivation of self-generated ethylene may serve to slow down ripening postharvest.

An additional problem in this fine balance between timing of harvest and the limited time available to accommodate the whole of logistical processes is that because of the abovementioned positive bio-feedback and consequent accelerated ripening, even a single item of fruit which matures ahead of the bulk of the stored fruit can have an adverse affect on the whole stored quantity.

Another problem is that broken surfaces of stems of fruit, vegetables or flowers after cutting and areas of damage to fruit skin cause vulnerability to infections. These infections may manifest during and after storage, especially with molds and in particular botrytis species. These organisms and their spores are present in low density on harvested products already at harvest, but may cause infection in the stored products. More importantly, such spores are present at relevant quantities in circulating air and especially in processing facilities where dust of dead plant material is present at high concentrations. Infected harvest products will seriously affect retail prices thereof and lead to considerable losses. Because damaged plant parts also release ethylene, these broken surfaces also cause a burst of ethylene. The release of ethylene associated with damaged plant parts accelerates flower maturation or opening or may lead to abscission of buds in early stages of flower development. This will seriously affect commercial product value and shorten vase life in the case of cut flowers.

One effective strategy commercially applied to counter ripening problems consists of cooling. For bananas this is performed by cooling to an established optimum temperature of 13,4°C. For mangos variable temperatures, according to species differences, are applied to slow down metabolism and maturation of the fruit. Cooling also slows down developing of activated spores of harmful micro-organisms. One of the disadvantages of the cooling approach is that cooling involves high energy costs.

A strategy to counter ripening problems that is often used in support of cooling, is to eliminate any hormonally active ethylene produced by the transported or stored product or present in the ambient air, by circulating the air through a "scrubbing" device where, with the aid of potassium permanganate, ethylene is oxidized to the hormonally inactive ethylene oxide (see for instance US 8,293,171). However, this limits the carrying capacity of any container to which this is applied by 5% and thus adds significant further costs to the product. In addition, even with complete neutralization of ethylene in the ambient air in containers treated in such a manner, active ethylene concentrations within the bags or boxes containing such bananas and mangos, can reach well above those known to have a biological effect.

Even when placed inside the containers (see for instance JP58220648), the available KMnO₄ preparations are hazardous as they may spontaneously combust with many polymers and substances such as glycerol. In addition, a brown staining sludge may develop on absorption of metabolic water produced by the fruit or other products. Such a brown sludge adversely affects the appearance of the products. To this is added that the total quantity of such a preparation (KMnO₄ adsorbed onto zeolit granules for example) is, at levels of affordability, too low to have any perceptible effect. The most important disadvantage of using KMnO₄ preparations is that such preparations offer only a very limited time span in which they release oxygen at any effective level, usually limited to at most a few days. This precludes effective use in transport by container and/or ship for intercontinental or other long distance purposes.

An alternative approach is to use 1-MCP, an artificial ethylene hormone-like molecule that is known for blocking the ethylene receptors of products. 1-MCP can be applied as an aromatic oil and can be vaporized into storage spaces. This vapor will dissolve into the surface water of fruit and other plant tissues and block ethylene receptors within the tissues. US2011143004 discloses a slow-release system contained in a coating, using cyclodextrin micro-containers for extended release of ethylene receptor antagonist 1-MCP, which could result in an extended period during which ripening and maturation are inhibited. This is required as the half-life of receptors, with immediate replacement by, as yet unblocked and therefore active new receptors, is usually less than 14 days. However, there are no examples of any factual effect of this coating on fruit or a post-harvest live product and the cost of products based on 1-MCP in various slow-release forms has been prohibitively high. The use of 1-MCP without such a slow-release system has proven effective in short term transport protection by blocking receptors in road transport in the US by using a 1-MCP dispenser. The commercial product for this manner of use also involves high costs: up to 500 Euro per truckload or transport. As of yet such a dispenser would be placed in the storage room outside of the boxes or bags wherein the products are stored. Therefore also in this case, even with complete neutralization of ethylene in the ambient air in containers treated in such a manner, active ethylene concentrations within the bags or boxes containing the harvest products, can reach well above those known to have a biological effect.

Finally, slowing down of maturation and ripening can be established by restricting the amount of oxygen. However, if the amount of oxygen available for the fruit is too low, this will result in various metabolic responses such as the increasing activation of lactic acid metabolism, which can result in undesirable effects on fruit taste. Unfortunately, unequal ripening causes unpredictable and uncontrollable effects on the minimum level of oxygen required or tolerated. This precludes low-oxygen controlled atmosphere transport to become implemented at any scale.

Thus as to date, no effective or affordable strategy has been developed to extend the period of post-harvest maturation to reduce the risk of production losses due to picking fruit too early or too late. Thus, the state of the art of post-harvest protection of harvested products results in significant and unavoidable losses due to a combination of metabolic and infectious processes. This problem applies to almost any other kind of ethylene sensitive perishable product, such as fruit and vegetables but also cut flowers or potted plants which are partly in bloom and have become very sensitive to ethylene in the process.

Therefore, there is a strong need in the fruit but also other agricultural industry, for means to protect ethylene sensitive perishable products from ethylene in order to slow down the maturation process of such fruit, which does not display the above described disadvantages and possibly even leads to further reduction of these problems by allowing harvesting at a later stage, resulting in positive effects on taste and appearance of the harvested products, quality and remaining post-retail shelf life.

### SUMMARY OF THE INVENTION

Objects of the present invention are therefore to provide a means for extended, i.e. weeks rather than days, protection of ethylene perishable products, during storage; and a method for effectively inhibiting degradation of ethylene sensitive perishable products within a unit of environment surrounding various trading qualities of such products, being either bags, boxes, crates, sacs or the like. The invention solves the abovementioned problems by making use of the abilities of chlorine to inactivate ethylene produced by ethylene producing products by using a chlorine releasing agent in the proximity of the ethylene sensitive perishable products. The chlorine releasing agent preferably has the ability for extended release of chlorine in time. This way degradation of ethylene sensitive perishable products which may produce ethylene by themselves is significantly inhibited over a long period.

This invention relates to a container for transport or storage of ethylene sensitive perishable products comprising within the container a chlorine releasing agent which is accessible for ethylene and a barrier that prevents direct contact of said chlorine releasing agent with said perishable products.

In another aspect, the invention also relates to such a container which comprises ethylene sensitive perishable products.

In another aspect the invention relates to a device for use in a container for transport or storage of ethylene sensitive perishable products, which comprises a chlorine releasing agent, wherein said chlorine releasing agent is attached to a surface of a solid support and optionally coated with a polymer coating which allows gaseous contact between the chlorine releasing agent and the surroundings thereof, wherein semi-permeable material which is permeable for ethylene and chlorine covers the optionally coated chlorine releasing agent, said semi-permeable material forming a barrier that prevents direct contact of the ethylene sensitive perishable products with the coated chlorine releasing agent.

In another aspect, the invention also relates to the use of this container or device for inhibiting degradation of ethylene sensitive perishable products.

In another aspect, the invention relates to a method for inhibiting degradation of ethylene sensitive perishable products, wherein a chlorine releasing agent is used to inhibit degradation of said ethylene sensitive perishable products, wherein ethylene released by said ethylene sensitive perishable products during storage or conservation thereof is functionally eliminated by means of said chlorine releasing agent.

The device and method of the invention can advantageously be applied in a container surrounding various trading quantities of said perishable products, being either bags, boxes, crates, sacs or even trucks and or shipping containers and the like. In the environment in such a container, namely directly adjacent to the source of any ethylene and within the same compartment, neutralization of ethylene can take place keeping the levels of bio-active ethylene well below the threshold for any accelerating effect on the ripening. The invention allows for a minimal continued release of ethylene with otherwise unaltered metabolism and maturation of the fruit item within the same compartment. Because of this, ripening is protracted and the storage life of the ethylene perishable products is extended and the product, once harvested and ripened, remains appreciable to clients for a longer period of time, weeks rather than days, during storage (i.e. it has an extended shelf life). As a result the risk of harvesting too early can be avoided and it is expected that if the device and method of the invention are used harvest may be postponed for even 3 or 4 days.

In addition, application of the invention avoids the high costs involved with cooling or use of 1-MCP. As the device can be placed in the container wherein the perishable products are stored or transported no additional space is occupied, thereby providing a maximal transport capacity.

The invention neither involves the adverse effects on ripening that occur when oxygen levels are kept too low or the staining that occurs when KMnO₄ is used.

The invention, once applied, has considerable potential for reduction of weight loss through reduction of the ethylene stimulated metabolic activity. Production of CO₂ will also be reduced, because metabolic production of CO₂, as a result of oxidative turnover of sugars, will be significantly reduced through the effective blockage of the ethylene stimulant pathway.

### SHORT DESCRIPTION OF THE FIGURES

Figure 1. Exemplary embodiment of the ethylene controlling device of the invention.
Figure 2. Cross-section of strip covered with a chlorine releasing agent for use in the ethylene controlling device of the invention.
Figure 3. 24 hour production of ethylene in ppm of bananas after arrival 25 days after harvest, exposed to 12 hours of treatment with KMnO₄, the ethylene controlling device of the invention (ECD) and 1-MCP, followed by 24 hours of exposure to ethylene at 60 ppm. (X-axis: time in hours, Y-axis: production of ethylene in ppm.

### DETAILED DESCRIPTION OF THE INVENTION

The inventor has found that by transporting or storing ethylene sensitive perishable products in a container wherein a chlorine releasing agent is present, degradation of ethylene sensitive perishable products is inhibited. To avoid direct contact between the ethylene sensitive perishable products and the chlorine releasing agent a barrier should be present between the ethylene sensitive perishable products and the chlorine releasing agent. The barrier should be permeable for gases and prevent direct contact of said chlorine releasing agent with said perishable products. The barrier used should have gas and vapour permeability to allow unfettered access of any ambient ethylene to the crystallized chlorine-radical releasing agent but without direct contact between produce and active agent to occur as this has been found to, on occasion, result in local damage to tissues.

When used for the purposes of the invention the container for transport or storage of ethylene sensitive perishable products of the invention contains ethylene sensitive perishable products. Ethylene sensitive perishable products may be selected from various harvested fruits and vegetables, cut flowers or potted plants which are partly in bloom. Non limited examples of products to be used in the container of the invention comprise ethylene sensitive perishable products that may be selected from the group of apples, apricots, artichokes, asparagus, avocados, bananas, beets, strawberries, broccoli, brussels sprouts, cabbage, carrots, cauliflower, cilantro, cucumbers, egg plants, figs, grapes, guavas, iceberg lettuce, lychees, nectarines, oranges, mandarins, melons, oregano, kiwifruit, leeks, lettuces, cantaloupes, papayas, peaches, peas, persimmons, pine apples, pods, plums, prunes, radishes, spinach, tomatoes, cut flowers such as alstroemeria, cyclamen, gerbera, gypsum, orchid, rose, and potted flowering plants, such as potted rose or any other ethylene sensitive form of produce.

In a container for transport or storage of ethylene sensitive perishable products the device is positioned with and directly adjacent to the harvested fruit or produce that requires protection. The term "container" as used for purposes of the invention should be understood as being any unit that is suitable for transport or storage of ethylene sensitive perishable products. Such a container should comprise a structure surrounding or covering the ethylene sensitive perishable products to be transported or stored.

Such a structure may be rigid (i.e. wall like) and be made of for instance plastic, cardboard, wood or steel or any other suitable material. Such containers comprise for instance plastic containers, cardboard containers, wooden containers or steel containers. Such a container may be a box or a crate. Also a loading chamber of a truck or a ship may be considered a container. The structure surrounding or covering the ethylene sensitive perishable products to be transported or stored may also be flexible and be made of plastic or paper or any other suitable material. A container made of this material may be in the form of sac or a bag. Also containers made in part of a rigid structure and in part of a flexible structure may be used for purposes of the invention, such as for instance a box with a flexible plastic sheet covering the products. Also a bag in a box or any suitable container that may be used for purposes of transport or storage of ethylene sensitive perishable products may be suitable.

The ethylene sensitive perishable products may be completely enclosed by the container, for instance a box or crate with a lid or a closed bag, or partially, such as by means of a box or a crate without a lid or a (partially) open bag. To allow for sufficient water vapour permeability and permeability to oxygen and carbon dioxide to prevent death of tissue by suffocation or accumulation of toxic quantities of CO₂, some degree of permeability of the enclosing or surrounding structure forming the container (plastic bag, box etc.) is preferred.

The container is preferably arranged such that it allows diffusion of moisture, oxygen and carbon dioxide into and out of said container. For this purpose the structure surrounding or covering the ethylene sensitive perishable products to be transported or stored should be permeable (e.g. with holes) for moisture, oxygen and carbon dioxide. In this respect the term "permeable" is also meant to encompass an opening of the container (such as a bag) made of impermeable material which is not completely closed in order to allow inward and outward diffusion of moisture, oxygen and carbon dioxide.

A form of enclosure surrounding quantities of the produce appropriate to the quantity of active material present is beneficial to the development of the full protective effect of the chlorine releasing agent, because the inventor has found that this is beneficial for the inhibition of degradation of ethylene sensitive perishable products. Using a structure surrounding or enclosing the ethylene sensitive perishable products results in local retention of chlorinated ethylene. This causes an even better inhibition of degradation of ethylene sensitive perishable products compared to a situation wherein native ethylene is merely scavenged away from the product. This is probably due to an ethylene receptor blocking effect caused by the chlorinated ethylene. Therefore the permeability of the enclosing or surrounding structure forming the container should be such that gases diffuse in a manner that local retention of chlorinated ethylene occurs to such an extent that it results in the abovementioned effects. This goal is achieved by using for instance a container with small holes or a bag with holes. Also a plastic bag sealed by strips wound loosely around the opening of it will be suitable as a container for these purposes. The skilled person will acknowledge that there are many more ways to reach the abovementioned goal.

The chlorine releasing agent used in the invention is preferably a crystalline material which has chlorine releasing properties that enable prolonged exposure of the ethylene sensitive perishable product. For this reason an important feature of said crystalline material as the source material of highly reactive chlorine, is that the process of releasing chlorine is slow by nature at occurring temperatures. The crystalline chlorine releasing material therefore provides for extended effective release, measured in periods of weeks rather than days. A chlorine releasing agent that is suitable for purposes of the invention is therefore a chlorinated cyanurate compound or a derivative thereof. Such agents provide slow release of chlorine, and thus prolonged exposure of the ethylene and the ethylene sensitive perishable products to chlorine. In particular agents such as sodium-di-iso-chloro-cyanurate or trichloro-cyanurate are suitable for the purposes of the invention. These compounds are commercially available in crystallized form. It should be understood that also other chlorine releasing agents that provide prolonged release of chlorine radicals may be suitable for purposes of the invention. In fact any slow chlorine release vehicle may be suitable. For instance slow release chlorine tablets prepared of hypochlorite compounds may also be applicable. For the purpose of remaining stable under circumstances of very high humidity levels, source materials for chloride radicals and chlorine release are best sought from substances that are not too hygroscopic and, even if they are hygroscopic to a certain degree, will remain stable over a long to very long period in water (weeks rather than days) as extensive condensation of water vapor on all available surfaces of containers of produce and its contents are a common occurrence.

It is preferred that for purposes of the invention the chlorine releasing agent is in the form of granula, preferably with an average diameter of between approximately 0,4 mm and 1,6 mm. The released rate of chlorine per gram of a chlorine releasing agent can be influenced by selecting a particular granule size of the source material because the release rate of chlorine per unit weight of source material is determined by the mean size or diameter, or total surface or surface to volume ratio of the granules used. The exposure of surface area from the granulate from which the chloride radical is released from the source material is probably the dominant determinant of the function of halogenation of ambient ethylene. In this respect a fine granulate has a higher surface area to weight ratio, releasing a larger quantity of chlorine per gram of source material per unit of time, but the total quantity of the source material then is the ultimate determinant of the period over which effective quantities of such gasses are released. For sodium-di-iso-chloro-cyanuric acid or trichlor-cyanuric acid a suitable diameter of granula has been found to be between approximately 0,4 mm and 1,6 mm.

As direct contact between produce and the source material of chloride radicals and/or chlorine gas is to be avoided, a barrier between the chlorine releasing material itself and the perishable products is provided. Such a barrier may be a material barrier, such as a partition or a partition-like structure, but a barrier may also be realised by spatial separation of the chlorine releasing agent and the ethylene sensitive perishable products, i.e. the chlorine releasing agent is placed in the container, adjacent to the products in such a way that direct contact with the ethylene sensitive perishable products is prevented. A material barrier may have the form of a small bag or sachet of permeable or semi-permeable material wherein the chlorine releasing agent is placed. Such a small bag or sachet may be composed of woven material or of otherwise sufficiently permeable material. Alternatively the chlorine releasing agent may be attached to a surface of a solid support and coated with a polymer coating which allows gaseous contact between the chlorine releasing agent and the surroundings thereof, wherein a cover which is at least permeable for ethylene and chlorine covers the coated chlorine releasing agent, said cover forming a barrier that prevents direct contact of the perishable products with the coated chlorine releasing agent.

With respect to avoiding direct contact between the chlorine releasing agent and the ethylene sensitive perishable products invention also relates to a device which comprises a chlorine releasing agent, wherein said chlorine releasing agent is attached to a surface of a solid support and optionally coated with a polymer coating which allows gaseous contact between the chlorine releasing agent and the surroundings, wherein permeable or semi-permeable material which is permeable for ethylene and chlorine and chlorine radicals, covers the coated chlorine releasing agent, said permeable or semi-permeable material forming a barrier that prevents direct contact of the perishable products with the coated chlorine releasing agent. Such a device can be put in a container for transport or storage of ethylene sensitive perishable products (e.g. bag or box) either by simply placing it inside the respective bag or box or by attaching it to the inner surface to the container by any suitable means. For instance the device may be put in a small bag, which is suitably permeable for vapour and gases. Such a bag containing the device may then be put in the container or attached to an inner surface of the container.

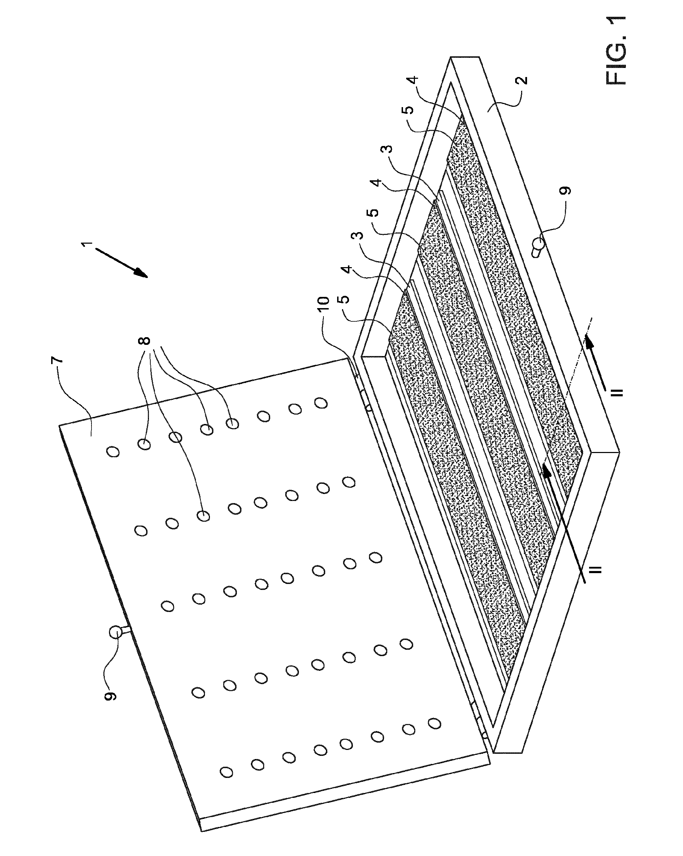

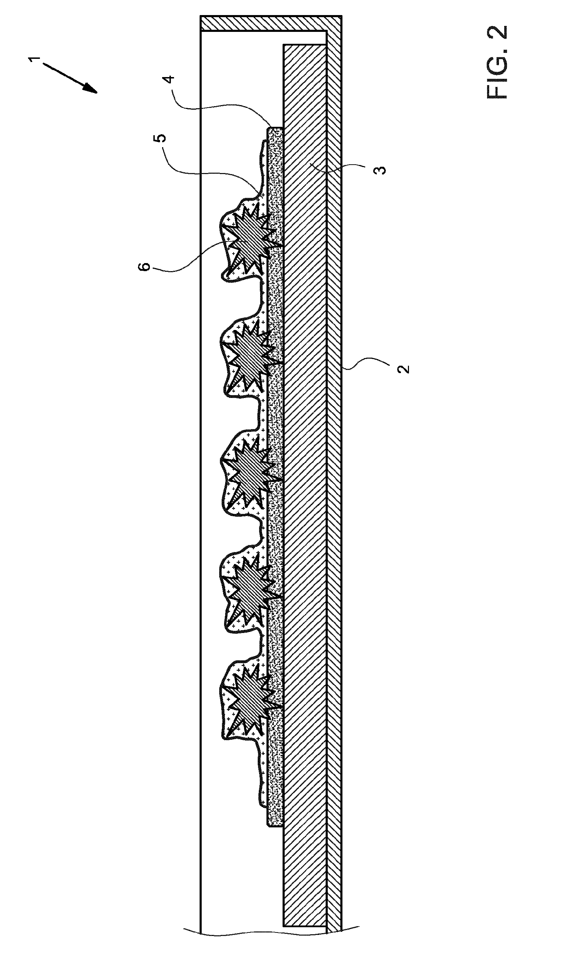

An exemplary embodiment of a device according to the invention is shown in figure 1 and figure 2. Such a device (1) comprises strips measuring for example 2 x 8 cm with for instance 4 grams of chlorine releasing granulate (e.g. sodium-di-iso-chloro-cyanurate granulate) (6) glued onto a flat carrier (3), for example a plastic strip. Figure 2 shows a cross section (indicated as II in figure 1) of such a strip placed on a support member (2) (for instance made of plastic). In this embodiment granulate (6) is embedded in a layer of glue (4) onto a flat carrier (3). Optionally the granulate is covered by a thin polymer layer (5). The actual quantity and granule size distribution is to be determined based on the size of the compartment contained within the container and the quantities of ethylene released per unit of time that are to be controlled. The strips may be placed on a support member (2) of the device. To prevent direct contact of the perishable products with the coated chlorine releasing agent a semi-permeable barrier may for instance be realised by means of a lid (7) of suitable material, such as plastic, with holes (8) in it to allow gas transport. The support member and the lid may be attached to each other by means of a hinge (10). The device may be closed by means of closing members (9) which are attached to the support member (2) and the lid (7). Alternatively a bag of semi-permeable woven or non-woven material may be used to put the strips in, the bag then functioning as a semi permeable body. For dosage purposes any suitable number of strips may be incorporated in such a body, for instance 3 as in figure 1.

For the purpose of controlling the released amount of chlorine radical per gram of chlorine releasing source material in a given period of time, granules prepared of the chlorine releasing agent are attached to the surface of a solid support in a layer of single granule thickness. Any suitable material may serve as support, for instance plastic or a biodegradable material. This provides the most predictable and controllable of surfaces with respect to release rate of chlorine radical per gram of source material. In such an embodiment granules are bound to or embedded in a surface of a support, for instance by a binding substance such as a glue. When using a binding substance such as glue or a similar agent, the side of the granula facing the surface of the support may be partially inactivated or impaired in its chlorine releasing properties by partial occlusion of the granular surface. Although this influences the release speed of chlorine radical per gram of source material, said release is still equally predictable. The fineness and evenness of the granulate are further determinants for the release rate of chlorine radical per gram of chlorine releasing source material. These factors can be controlled by a process of milling and sieving of the ground source material.

Optionally, the granulate is covered by a thin layer of a polymer coating. Such a polymer coating forms a means to control the generation and release of chlorine, Cl- and chloride radicals. The thickness of this layer may for instance be between 1 and 20 micron, such as 3 or 10 micron. The polymer layer should be resistant to contact with the source material as well as the presence of chlorine gas, Cl-and chloride radicals in considerable concentrations for a long period (weeks rather than days).

The polymer coating may be applied to the granula in the form of a dispersion. Such a dispersion may comprise a polymer composition produced the monomers vinyl acetate and ethylene, optionally mixed with a vinyl ester of a highly branched carboxylic acid. In case the polymer is produced from the monomers vinyl acetate and ethylene, the polymer is a copolymer. Such copolymer may e.g. be Vinnapas EP 400 or Vinnapas EF 3777 of Wacker Chemie AG. In case the polymer is produced from the monomers vinyl acetate, ethylene and a vinyl ester of a highly branched carboxylic acid, the polymer is a terpolymer. The vinyl ester of a highly branched carboxylic acid may be for example Versatic acid (9 or 10) of Momentive Performance Materials. The terpolymer may e.g. be Vinnapas EZ 3523 of Wacker Chemie AG.

Glycerol may be present in the polymer layer in an amount of from 0,1 to 20 % by weight of the polymer content, preferably from 5 to 10 % by weight of the polymer content, such as approximately 8% by weight of the polymer content, the balance of the composition being water. Dispersions produced from the abovementioned polymers allow for inclusion of glycerol, and should not sequester glycerol during the drying process.

A polymer coating used to cover the chlorine releasing agent should allow gas and vapour diffusion between the granula and the surroundings. In addition, this layer slows down the dissociation of the source material so as to extend the life span of the source system as a whole. It should be noted that in the light of the need to produce such constructs in an industrial manner (even if the active granulate is added onto the construct at the latest possible moment in time) such a polymer coating with reduced permeability, whilst increasing the amount of source material required may well provide for an extended "shelf" life of the construct of up to 6 months (and under extreme designs and properties of the suppliers packaging, up to a year). This may well increase the commercial applicability of the invention.

Because a "shelf" life of the construct of up to 6 months may not be required for all fields of application of the invention, the use of a device or simply the source material for the release of chlorine radicals and Cl- dissociation products without such a polymer covering is totally feasible and is to be considered as falling under this application as anyone skilled in the art would appreciate the effectiveness of this variant. Under these parameters the total quantity of source material in proportion to the produce to be protected may be reduced, with some degree of reduction of the "life span" of the system as whole as a consequence that may very well be acceptable or even wanted under the given circumstances.

The invention also relates to a method for inhibiting degradation of ethylene sensitive perishable products, wherein a chlorine releasing agent is used to inhibit degradation of said perishable products, wherein ethylene released by said perishable products during storage or conservation thereof is functionally "eliminated" by means of said chlorine releasing agent. With functional elimination of ethylene is meant that ethylene is eliminated by chlorination rather than spatial removal of the ethylene. In a preferred embodiment the container or device of the invention are used to perform such a method. How the container and device of the invention can be applied for the purposes of the invention will be illustrated in the following examples which are merely meant to illustrate the invention and not to limit the invention.

### EXAMPLES

### Example 1.

The examples shown in this application all used a polymer coating in the form of a water based dispersion of EF3777 polymer (as provided by Wacker), in a layer of 3 or 10 microns and with either 5 or 10% of glycerol by weight of polymer.

To investigate whether ethylene can be converted at considerable speed the following experiment was conducted. Using a 1 m³ stainless steel airtight container 200 ml of ethylene gas was added to ambient air within to achieve a 200 ppm concentration, with a final content of 0,085 mol of ethylene. A 40 gram quantity of finely granulated sodium-di-chloro-iso-cyanurate was placed in the form of separate granula as a releaser of chlorine and or Cl- reaction products. The granula were placed in the container in a small box with open contact with the ambient air in the container. A tray of water was placed in the container to simulate the presence of water condensation products and as a possible reaction medium for the interaction of chlorine products and ethylene. The 40 grams of chlorine product releasing material equated to 26 grams or 0,37 mol of chloride. Over an 8 hour period of the first day and at 2 hour intervals the free and non oxidized / non-halogenated ethylene concentration in the reaction chamber was measured followed by once daily measurements at 24 hour intervals for 4 more days. The experiment was repeated with identical quantities of chlorine product releasing granulate and different starting concentrations of ethylene.

The results are shown below in table 1.

**Table 1: ethylene conversion in the presence of a chlorine releasing agent**

| Ethylene concentrations measurements (detection threshold: 1 ppm)of non-halogenated ethylene. | | | | | | | | |
|---|---|---|---|---|---|---|---|---|
| Ethylene measurements using ICA56 portable ethylene meter, supplier: VWR, the Netherlands | | | | | | | | |
| Starting conc. ethylene (ppm) | conc. ethylene day 1 | | | | conc. ethylene day 2 | conc. ethylene day 3 | conc. ethylene day 4 | conc. ethylene day 5 |
| | 2 hrs | 4 hrs | 8 hrs | 10 hrs | | | | |
| 200 | 146 | 110 | 80 | 58 | 42 | 28 | 22 | 17 |
| 100 | 73 | 55 | 40 | 29 | 21 | 14 | 11 | 8,5 |
| 50 | 34 | 24 | 16 | 10 | 5 | 2 | 1 | |
| 25 | 17 | 12 | 8 | 5 | 2,5 | 1 | | |
| 10 | 8,5 | 6 | 4 | 2,5 | 1 | | | |
| 5 | 4,25 | 3 | 2 | 1 | | | | |
| 2 | 1,5 | 1 | | | | | | |

From these results it is evident that at an initial rate of about 4 to 1 based on molecular weight (0,37 mol to 0,085 mol) over a 5 day period ethylene is converted at an exponential rate at a considerable speed.

### Example 2.

In the following experiment the effects of neutralizing ethylene on metabolism, and in particular O₂ consumption, CO₂ production and ethylene production, of harvested bananas was tested. Using 4000 ml metabolic chambers and between 700 and 850 grams of post climacteric, freshly harvested bananas, O₂ consumption, CO₂ production and ethylene production was measured on a 24 hour basis, with flushing of the chambers with ambient air directly after each measurement. Bananas were kept at 13,4 °C. This is the normal temperature that is maintained at transport and is known to suppress the metabolism of bananas without negative effects while still delaying the onset of the self-acceleration moment of the spontaneous rise in ethylene release. The study lasted 35 days (5 weeks), which is normally sufficiently long to allow for the spontaneous occurrence of commencement of ethylene production acceleration with self acceleration and proportional increase in metabolic activity. From the concentrations of the gasses, production or consumption per kg bananas per hour was determined. Ethylene controlling devices of the invention used in this experiment comprised strips with 4 grams of sodium-di-iso-chloro-cyanurate granulate glued onto flat strips of plastic measuring 2 x 8 cm. Strips were be incorporated in a plastic body with holes in it to allow transport of gas and vapour. Bananas were exposed either to no granulate (a device without strips of sodium-di-iso-chloro-butanocyanurate granulate) or to an ethylene controlling device, formulated as described above and loaded with a total of 4, 8 or 12 grams of granulate of di-chloro-iso-cyanurate (i.e. 1, 2 or 3 strips respectively). A total of 16 metabolic chambers was used, each group of treatments was repeated 4 times. The results of all calculations, converted into week averages are shown in summary in table 2.

**Table 2. The effects of neutralizing ethylene by means of a chlorine releasing agent on O₂ consumption, CO₂ production and ethylene production**

| **average ethylene production in µl kg⁻¹ h⁻¹** | | | | | |
|---|---|---|---|---|---|
| | **week 1** | **week 2** | **week 3** | **week 4** | **week 5** |
| **controls** | 0,2 | 0,3 | 0,7 | 4,8 | 27,3 |
| **4 grams** | 0,2 | 0,2 | 0,3 | 0,8 | 1,4 |
| **8 grams** | 0,2 | 0,2 | 0,3 | 0,8 | 1,4 |
| **12 grams** | 0,2 | 0,2 | 0,3 | 0,8 | 1,4 |
| | | | | | |

| **average CO₂ production in ml kg⁻¹ h⁻¹** | | | | | |
|---|---|---|---|---|---|
| | **week 1** | **week 2** | **week 3** | **week 4** | **week 5** |
| **controls** | 10 | 12 | 14 | 23 | 38 |
| **4 grams** | 10 | 11 | 11 | 12 | 14 |
| **8 grams** | 10 | 10 | 11 | 12 | 14 |
| **12 grams** | 10 | 11 | 11 | 10 | 14 |
| | | | | | |

| **average O₂ consumption in ml kg⁻¹** h⁻¹ | | | | | |
|---|---|---|---|---|---|
| | **week 1** | **week 2** | **week 3** | **week 4** | **week 5** |
| **controls** | 9 | 11 | 13 | 18 | 35 |
| **4 grams** | 9 | 11 | 11 | 11 | 12 |
| **8 grams** | 9 | 11 | 11 | 11 | 12 |
| **12 grams** | 9 | 11 | 11 | 10 | 11 |

It is evident from these results that the normal activation of metabolism with increase of ethylene production commencing 3-4 weeks after harvest with cooling at 13,4 °C is effectively suppressed to beyond 35 days. There is no clear dose effect of the presence of the granulate which indicates a considerable excess of material once dosed above 4 grams di-chloro-iso-cyanurate per kg of bananas in this setup. The biological effect of neutralizing ethylene by halogenation is clearly present. The mechanism of this inactivation is as yet not fully understood and cannot be easily deduced in full from these experiments at this stage.

### Example 3

To compare the ethylene controlling device of the invention with conventional KMnO₄ carrying structures the following experiment was carried out. Strips carrying 4, 8 and 12 grams of sodium-di-chloro-iso-cyanurate granulate, adherent onto a flat carrier material (4 grams per strip of plastic measuring 2 x 8 cm, using 1, 2 or 3 strips per box of 20 kg bananas alternatively) were placed into plastic bags containing 20 kg of bunches of 5-7 bananas per bunch, directly at the production site and immediately after washing and cleaning as per usual. Plastic bags with bananas were sealed by strips wound loosely around openings to allow diffusion of vapor, O₂ and CO₂ to a certain extent. The bags were placed in standard cardboard boxes for palletizing at 40 boxes to a pallet (8 layers of 5 boxes in conventional configuration). Boxes were stacked with test boxes at the corners of the pallets only, separated from each other by a control box without added material and not placed on the top or in the bottom layer. The pallet with test material was placed alongside a second pallet without any treated boxes as a second control. Both pallets were placed in the 4^{th} row from the end of the reefer container for transport and were shipped with routine cooling treatment only and without any conditioning of atmosphere but cooled to temperature of 13,4 °C with the usual tolerances. An identical experiment was conducted at the same time under identical circumstances with boxes of bananas allocated to either experiment randomly from the same source and harvested at the same time. In this experiment instead of a halogen source, an oxygen source (commercially purchased sachets of 8 grams combined weight of potassium permanganate attached onto a granular aluminum-oxide carrier) was placed within plastic bags containing bananas. Identical to the first experiment test boxes with oxygen releasing sachets carried either 1, 2 or 3 sachets in an identical distribution of boxes involved. Again a directly adjacent pallet of untreated bananas was designated as a separate, additional control. At arrival ethylene concentration were measured in all test and control boxes of the pallet containing treated boxes as well as in a representative sample of boxes (12) of the adjacent pallet from the same levels as the treated boxes from the test pallet. In addition to ethylene level measurements, bananas were color graded every second day for 6 days as an average color grade per box. With regard to the color grade it is noted that a low grade indicates a good quality of the fruit and a high grade indicates bad quality of the fruit. The results are table below.

**Table 3. Comparison between the ethylene controlling device (ECD) of the invention with conventional KMnO₄ carrying structures.**

| **ECD** | **day 0** | | **day 2** | | **day 4** | | **day 6** | |
|---|---|---|---|---|---|---|---|---|
| **test bananas** | **eth. ppm** | **grade** | **eth. ppm** | **grade** | **eth. ppm** | **grade** | **eth. ppm** | **grade** |
| **1 strip** | 0,5 | 1,2 | 0,5 | 1,5 | 0,6 | 1,5 | 0,6 | 1,6 |
| **2 strips** | 0,5 | 1,2 | 0,5 | 1,4 | 0,5 | 1,5 | 0,5 | 1,6 |
| **3 strips** | 0,5 | 1,2 | 0,5 | 1,5 | 0,5 | 1,4 | 0,7 | 1,6 |
| **controls 1** | 0,6 | 1,4 | 0,7 | 1,9 | 0,7 | 2,1 | 1 | 2,4 |
| **controls 2** | 0,7 | 1,5 | 0,9 | 2,1 | 1,1 | 2,5 | 2,2 | 2,9 |
| | | | | | | | | |

| **KMnO₄** | **day 0** | | **day 2** | | **day 4** | | **day 6** | |
|---|---|---|---|---|---|---|---|---|
| **test bananas** | **eth. ppm** | **grade** | **eth. ppm** | **grade** | **eth. ppm** | **grade** | **eth. ppm** | **grade** |
| **1 sachet** | 1,3 | 1,5 | 1,4 | 1,8 | 2,4 | 2,2 | 3,7 | 2,7 |
| **2 sachets** | 1,2 | 1,4 | 1,2 | 1,8 | 1,6 | 2,1 | 2,1 | 2,5 |
| **3 sachets** | 0,9 | 1,4 | 1,1 | 1,5 | 1,2 | 2,1 | 1,4 | 2,4 |
| **controls 1** | 1,5 | 1,7 | 1,8 | 1,9 | 3,5 | 2,6 | 5,6 | 3,2 |
| **controls 2** | 1,6 | 1,7 | 1,9 | 2,2 | 3,7 | 2,8 | 5,9 | 3,3 |

Controls 1 shows the averaged results of the sampling of control boxes within the test pallet, controls 2 the results of measurements in the 12 boxes of the adjacent pallet. From the results it is evident that the presence of the granulate of the ethylene controlling device (ECD) of the invention has resulted in suppression of (the expected rise in) ethylene production during the 3-4 weeks of transport overseas in a standard reefer container. This is associated with a marginal difference in color grade on arrival between treated and control bananas. However, left to develop spontaneously at 13,4 °C after arrival, differences gradually increase demonstrating an effective delay on the process of spontaneous maturation. Surprising in itself is that the effect has to some degree possibly extended beyond the boxes / bags containing the strips into the boxes immediately above and below the boxes with treated bananas with a small, but recognizable difference between ethylene presence and development rate of maturation in the adjacent pallet. In the case of suppression with potassium permanganate, the suppressive effects on the ethylene levels within the test boxes is evidently less effective than that in ECD treated boxes. In addition, differences between treated boxes and control boxes, both on the same pallet and those on the adjacent pallet, are considerably smaller with less difference between boxes in either control group when using the ECD.

The absence of any clear dose response with respect to ethylene production or color development in relation to the number of strips placed in the boxes indicates that at 4 grams of the granulate as defined per box, sufficient capacity for the desired effect to occur (both in time as well as over time) is provided by 4 grams of granulate. In contrast some dose-response relationship seems to exist between bananas protected by 1, 2 or 3 sachets of the KMnO₄ carrying structures, respectively.

The results above suggest that the effects of halogenation may be greater than those of oxygenation. The absence of a dose relationship between the amount of halogen producing material and ethylene concentration and maturation of the target fruit, whereas such a relationship exists for KMnO₄, suggests that potentially halogenated ethylene may have an additional ethylene-receptor blocking effect.

### Example 4

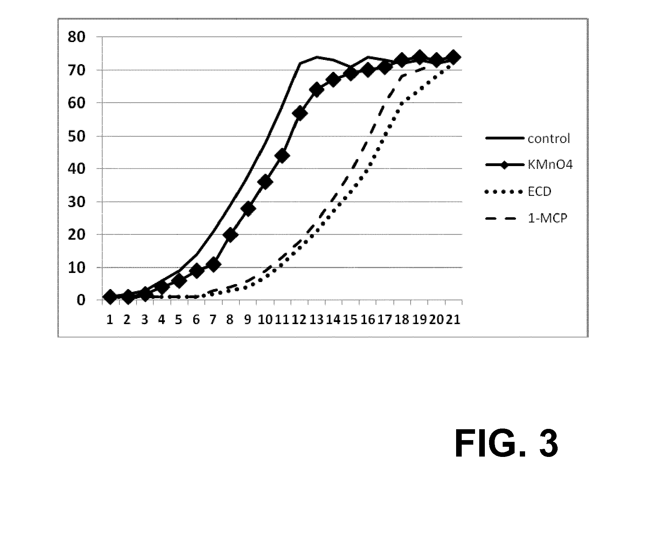

To investigate whether the ethylene controlling device of the invention may be able to cause an additional ethylene-receptor blocking effect on top of scavenging ethylene gas the following experiment was carried out. After arrival untreated bananas were exposed to 12 hours of halogenation of any ethylene produced (4 grams of granulate per 20 kg of bananas in bag sealed with strap). For this purpose an ethylene controlling device, formulated as described above and loaded with a total of 4 grams of granulate of di-chloro-iso-cyanurate (i.e. 1 strip) was used. The bananas were compared to bananas treated by 12 hours of oxidation (2 sachets of KMnO₄ on aluminum oxide granulate (8 grams combined weight per sachet) per 20 kg of bananas) or 1-MCP, 12 hours of exposure to air in enclosed space (108 cubic meter with 1 dosing Unit of commercially purchased 1-MCP. Subsequently all 4 groups of bananas were exposed to 24 hours of a controlled atmosphere containing 60 ppm of ethylene ("standard gassing"). Bananas were followed for 21 days of ripening as measured by grading of color and measurements of ethylene production over 24 hours by placing appr. 1 kg of bananas in a 4 liter container as before, every day. Between measurement periods all bananas were stored separately at 13,4 °C. The results show a delay of onset of (self-)acceleration of ethylene production after 12 hours of treatment using the device of the invention and 1-MCP as compared to treatment by oxidation provided by commercially purchased KMnO₄ sachets. See also Figure 3.

### Example 5

The effectiveness of the ethylene controlling device (ECD) of the invention in protecting sensitive products against the deleterious influences of ambient ethylene, even in late intervention studies (in protecting produce purchased at local retail outlets) by daily recording the sale-ability of the produce ("shelf-life", is illustrated by the following table. Tested by placement of produce in and exposure to ethylene in 1 m³ air chambers with continuous exposure to ethylene naturally produced by 1.5 kg of overripe banana's at room temperature (16-18C°) and with or without continuous presence of and protection by a ECD unit containing 4 grams of polymer coated granulate glued to a strip of 2 x 8 cm, the strip being incorporated in a plastic body with holes in it to allow transport of gas and vapour.

The results are shown in table 4:

**Table 4: Improvement of shelf life of ethylene sensitive perishable products by exposure to the ethylene controlling device of the invention in a later stage of ripening.**

| product | Number of items per test | Number of repeats | Mean extension of shelf life in days |
|---|---|---|---|
| Banana | 6 | 4 | 4,7 |
| Mango | 6 | 4 | 6,3 |
| Kiwi | 6 | 4 | 4,5 |
| Melon | 6 | 4 | 7,9 |
| Aubergine (egg plant) | 8 | 3 | 11,1 |
| Broccoli | 8 | 3 | 3,5 |
| Ice berg salade | 12 | 2 | 4,7 |
| Cucumber | 8 | 6 | 8,8 |
| Pear | 8 | 6 | 6,7 |
| Avocado | 4 | 7 | 5,5 |
| Cauliflower | 6 | 4 | 5,2 |
| Alstroemeria | 6 | 4 | 5,9 |
| Cyclamen | 6 | 4 | 7,9 |
| Gerbera | 6 | 4 | 4,2 |
| Gypsum | 6 | 4 | 6,9 |
| Orchid | 8 | 4 | 12,8 |
| Pot plant rose | 8 | 4 | 7,4 |
| Cut rose (Pink Aqua) | 10 | 4 | 4,3 |
| Cut rose white (Akito) | 10 | 4 | 3,7 |

This example shows that the shelf life of ethylene sensitive perishable products, even when protection commences only after release of produce to retail centers, i.e. in a rather late stage of ripening, can still be substantially prolonged by exposing the product to a chlorine releasing agent and placed in a moderately restrictive display structure intended for use with ethylene sensitive perishable products according to the invention.

The examples show that the shelf life of ethylene sensitive perishable products can be substantially prolonged by exposing the product to a chlorine releasing agent in a container for transport or storage of ethylene sensitive perishable products according to the invention. The results show that a device which comprises a chlorine releasing agent, wherein said device a chlorine releasing agent is attached to a surface of a solid support and coated with a polymer coating which allows gaseous contact between the a chlorine releasing agent and the surroundings, and thus wherein a material which is permeable for ethylene covers the chlorine releasing agent, said semi-permeable material forming a barrier that prevents direct contact of the perishable products with the coated a chlorine releasing agent, is suitable for use in such a container. In addition the examples show that the device and container can be applied in a method to inhibit degradation of sensitive perishable products.

## Claims

1. A container for transport or storage of ethylene sensitive perishable products comprising within the container a chlorine releasing agent which is accessible for ethylene and a barrier that prevents direct contact of said chlorine releasing agent with said perishable products.

2. The container according to claim 1 which comprises ethylene sensitive perishable products.

3. The container according to claim 2, wherein the ethylene sensitive perishable products are selected from the group of apples, apricots, artichokes, asparagus, avocados, bananas, beets, strawberries, broccoli, brussels sprouts, cabbage, carrots, cauliflower, cilantro, cucumbers, egg plants, figs, grapes, guavas, iceberg lettuce, lychees, nectarines, oranges, mandarins, melons, oregano, kiwifruit, leeks, lettuces, cantaloupes, papayas, peaches, peas, persimmons, pine apples, pods, plums, prunes, radishes, spinach, tomatoes, cut flowers such as alstroemeria, cyclamen, gerbera, gypsum, orchid, rose, and potted flowering plants, such as potted rose.

4. The container according to any of the claims 1-3, wherein the chlorine releasing agent is a chlorinated cyanurate compound or a derivative thereof.

5. The container according to any of the claims 1-4 wherein the chlorine releasing agent is in the form of granula with an average diameter of between approximately 0,4 mm and 1,6 mm.

6. The container to any of the claims 1-5, wherein the container is arranged such that it allows diffusion of moisture, oxygen and carbon dioxide into and out of said container.

7. The container according to any of the claims 1-6, wherein the chlorine releasing agent is attached to a surface of a solid support and coated with a polymer coating which allows gaseous contact between the chlorine releasing agent and the surroundings thereof, wherein a cover which is at least permeable for ethylene and chlorine covers the coated chlorine releasing agent, said cover forming a barrier that prevents direct contact of the perishable products with the coated chlorine releasing agent.

8. The container according to any of the claims 1-6, wherein the barrier is formed by a sachet of permeable or semi-permeable material wherein the chlorine releasing agent is placed.

9. A device for use in a container for transport or storage of ethylene sensitive perishable products, which comprises a chlorine releasing agent, wherein said chlorine releasing agent is attached to a surface of a solid support, wherein semi-permeable material which is permeable for ethylene and chlorine covers the chlorine releasing agent, said semi-permeable material forming a barrier that prevents direct contact of the ethylene sensitive perishable products with the coated chlorine releasing agent.

10. The device according to claim 9 wherein the chlorine releasing agent is coated with a polymer coating which allows gaseous contact between the chlorine releasing agent and the surroundings thereof.

11. The device according to claim 9 or claim 10, wherein the chlorine releasing agent is a chlorinated cyanurate compound or a derivative thereof.

12. The device according to any of the claims 9 to 11, wherein the chlorine releasing agent is in the form of granula with an average size of between approximately 0,4 mm and 1,6 mm.

13. Use of the container according any of the claims 1-8 or the device according any of the claims 9-12 for inhibiting degradation of ethylene sensitive perishable products.

14. A method for inhibiting degradation of ethylene sensitive perishable products, wherein a chlorine releasing agent is used to inhibit degradation of said ethylene sensitive perishable products, wherein ethylene released by said ethylene sensitive perishable products during storage or conservation thereof is functionally eliminated by means of said chlorine releasing agent.

15. The method according to claim 14 comprising using the container according to any of the claims 1-8 or the device according to any of the claims 9-12.
